(19) Europäisches Patentamt
European Patent Office
Office européen des brevets

(11) **EP 3 086 226 A1**

(12) **EUROPEAN PATENT APPLICATION**

(43) Date of publication:
**26.10.2016 Bulletin 2016/43**

(51) Int Cl.:
***G06F 9/445*** (2006.01)

(21) Application number: **15305616.3**

(22) Date of filing: **23.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Heen, Olivier**
**35576 Cesson-Sévigné (FR)**
• **Eluard, Marc**
**35576 Cesson-Sévigné (FR)**
• **Le Scouarnec, Nicolas**
**35576 Cesson-Sévigné (FR)**

(74) Representative: **Browaeys, Jean-Philippe et al**
**TECHNICOLOR**
**1-5, rue Jeanne d'Arc**
**92130 Issy-les-Moulineaux (FR)**

(54) **DEVICE AND METHOD FOR PROVIDING CODE BLOCKS TO A CLIENT DURING EXECUTION OF SOFTWARE CODE**

(57)    A client (110) has a block of the code to be executed, executes (S22) the part and then determines (S23) the next block and requests (S24) it from a server (120) that returns (S25) the block and a list of possible following blocks, and updates (S26) a list of blocks executed by the client. The client then executes (S27) the next block. To modify the program, it is sufficient to patch the corresponding block or blocks on the server. The transition system, which defines possible following blocks, is modified to integrate the new block in place of the old one. Depending on the modifications, it may be necessary to patch the memory of the client too. In this case, a complement block is added in order to modify the client memory to be compatible with the new block.

S20 — Client requests block $B_0$

S21 — Server responds with block $B_0$ and transitions $T_0$

S22 — Client executes block $B_0$

S23 — Client calculates next block $B_i$ using transitions $T_0$

S24 — Client requests next block $B_i$

S25 — Server responds with block $B_i$ and transitions $T_i$

S26 — Server updates list of blocks executed by client

S27 — Client executes block $B_i$

Figure 2

EP 3 086 226 A1

## Description

TECHNICAL FIELD

The present disclosure relates generally to computer systems and in particular to providing software code for execution on a client.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The frequency of patching of software code - i.e. modification of deployed software code to implement new features, correct errors, etc. - has increased over the last few years. While some patches may have little importance, other patches like security patches can be critical and be implemented immediately.

Hot swapping enables modification of the code of a program without having to interrupt execution. This technique however is used for hardware components such as disks, memory, USB components and is thus not suitable when the hardware is not changed.

Patching software that is not currently executed is easy as it may suffice to simply put the patch in place after which the code has been updated. However, patching software code that is executed is trickier. This may be a big problem as it is relatively common for software to run for a long time, for example game consoles are often used for hours on end, or even without end such as on gateways, security systems and even because the user does not switch off the computer to avoid wasting time when it starts again.

A known way to patch running code is to require restart of the machine the code runs on. An obvious drawback is that this interrupts program execution.

Hot patching and memory injection are hacking techniques that allow partial modification of running code by injection of code in the memory. The technique is described, in French, by Fred Raynal and Jean-Baptiste Bedrune in "Malicious Debugger!" Sogeti IS/ESEC. However, there is a high risk of program crash, mainly due to the use of a so-called ptrace system call and the overwriting of previous memory space. In addition, languages with dynamic call dispatching (e.g., Java) are able to support redefinition of the code supporting some classes, but only at the granularity of classes. Hence, some code like main loops of threads cannot be hot patched.

The game consoles PS4 and XBoX1 allow "play without all game", which means that game execution can start before all of the code has been downloaded. While this in a sense can be said to modify the code that is executed, it does not allow patching of the downloaded code. Similar possibilities exist with P2P progressive download.

None of the techniques allows fine grained modification of code during execution without restart. In particular, many of these techniques require user patience during the update. Further, some techniques require that the program is either stop or aware of the on-going patching operation.

SUMMARY OF DISCLOSURE

In a first aspect, the present principles are directed to a server device for providing blocks of code of a program to a client device executing the blocks of code. The server device comprises an interface configured to relay messages between the client device and a processor of the server device and the processor configured to receive from the client device a request comprising an identifier of a block of code, obtain a subsequent block of code corresponding to the identifier, obtain at least one transition for the subsequent block of code, the transition enabling the client to calculate an identifier of a block of code to request following execution of the subsequent block of code, and send the subsequent block of code and the transition for the subsequent block of code to the client.

Various embodiments of the first aspect include:

- That the server device further comprises memory configured to store blocks of code and identifiers of blocks of code provided to the client and transitions provided to the client, and that the processor is configured to store identifiers of blocks of code provided to the client in the memory. The processor can be configured to send the subsequent block of code and the transition for the subsequent block of code to the client if the memory does not store the identifier of the request, and, if the memory stores the identifier of the request, to send to the client an indication that a block of code corresponding to the identifier has been provided.

  The processor can also be configured to determine whether the subsequent block of code has been replaced by an updated block during the client's execution of the program and, in this case, to determine whether a memory patch is needed at the client, wherein if no memory patch is needed, the subsequent block is the updated block, and, if a memory patch is needed, the subsequent block of code is a block configured to patch the memory when executed and for which the transitions lead to the updated block.

- That the processor is further configured to compute a set of blocks of code that can be requested by the client and to provide the subsequent block to the client when the identifier in the request corresponds to one of the blocks of the set of blocks.

The processor can be configured to compute the set of blocks of code using at least one method from the group of: partial evaluation, block prediction, speculative execution and memoization.

- That the processor is further configured to communicate with the client device over an encrypted channel.

In a second aspect, the present principles are directed to a method for providing blocks of code of a program to a client device executing the blocks of code, the method comprising at a server device comprising a processor: receiving from the client device a request comprising an identifier of a block of code, obtaining a subsequent block of code corresponding to the identifier, obtaining at least one transition for the subsequent block of code, the transition enabling the client to calculate an identifier of a block of code to request following execution of the subsequent block of code, and sending the subsequent block of code and the transition for the subsequent block of code to the client.

Various embodiments of the first aspect include:

- That the server device further comprises memory configured to store blocks of code and identifiers of blocks of code provided to the client and transition provided to the client, and that the method further comprises storing an identifier of the subsequent block of code in the memory.

The sending the subsequent block of code and the transition for the subsequent block of code to the client can be performed if the memory does not store the identifier of the request, and the method comprises, if the memory stores the identifier of the request, sending to the client an indication that a block of code corresponding to the identifier has been provided.

The method can further comprise determining whether the subsequent block of code has been replaced by an updated block during the client's execution of the program and, in this case, determining whether a memory patch is needed at the client, wherein: if no memory patch is needed, the subsequent block is the updated block, and, if a memory patch is needed, the subsequent block of code is a block configured to patch the memory when executed and for which the transition lead to the updated block.

- That the method further comprises computing a set of blocks of code that can be requested by the client and wherein the subsequent block is sent to the client when the identifier in the request corresponds to one of the blocks of the set of blocks.

Computing the set of blocks of code can include using at least one method from the group of: partial evaluation, block prediction, speculative execution and memoization.

In a third aspect, the present principles are directed to a client device for receiving blocks of code of a program from a server device, the client device comprising an interface and a processing unit configured to execute a block of code, calculate, using at least one transition for the block of code received from the server device, an identifier of a subsequent block of code, transmit to the server device, via the interface, a request comprising the identifier of a subsequent block of code, receive from the server device, via the interface, the subsequent block of code and at least one transition for the subsequent block of code, the at least one transition enabling the processing unit to calculate an identifier of a block of code to request following execution of the subsequent block of code.

In a fourth aspect, the present principles are directed to a method for receiving blocks of code of a program from a server device, the method comprising at a client device executing by a processing unit a block of code, calculating by the processing unit, using at least one transition for the block of code received from the server device, an identifier of a subsequent block of code, transmitting by the processing unit, via an interface of the client device, to the server device, a request comprising the identifier of a subsequent block of code, and receiving from the server device, via the interface, the subsequent block of code and at least one transition for the subsequent block of code, the at least one transition enabling the processing unit to calculate an identifier of a block of code to request following execution of the subsequent block of code.

BRIEF DESCRIPTION OF DRAWINGS

Preferred features of the present principles will now be described, by way of non-limiting example, with reference to the accompanying drawings, in which

Figure 1 illustrates an example system implementing an embodiment in accordance with the present principles; and
Figure 2 illustrates an example method for execution of code in an embodiment in accordance with the present principles.

DESCRIPTION OF EMBODIMENTS

It should be understood that the elements shown in the figures may be implemented in various forms of combinations of hardware and software. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

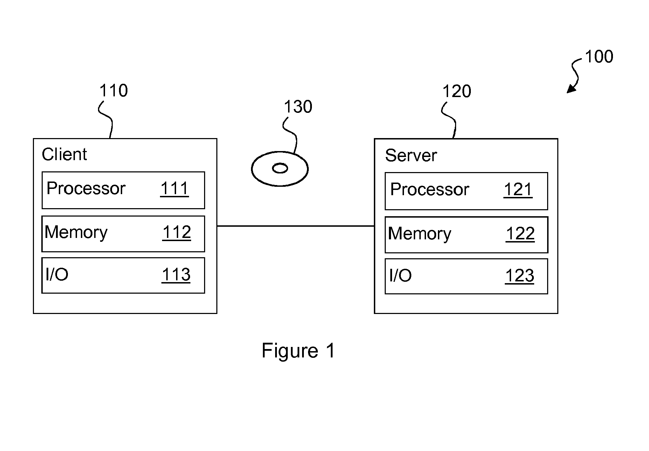

Figure 1 illustrates an example system 100 implementing an embodiment in accordance with the present principles. The system 100 comprises a client 110 configured to execute software code and a server 120 configured to provide the software code to the client 110. Although only illustrated for some of the devices, each device 110, 120 comprises at least one hardware processing unit ("processor") 111, 121, memory 112, 122 and at least one communications interface 113, 123 configured to communicate with the other device. The skilled person will appreciate that the illustrated devices are very simplified for reasons of clarity and that real devices in addition would comprise features such as internal connections and power supplies. The client processor 111 is configured to request and execute blocks of code, the server processor 121 is configured to respond to such requests, as will be described. A non-transitory storage medium 130 stores instructions that, when executed by a processor, perform the TCP handshake method at the terminator device described hereinafter.

The processor 111 of the client is configured to execute the software code. The software code is arranged in a series of blocks B, preferably so-called basic blocks, and the software code is arranged so that it is sufficient for the client 110 to store only the presently executed basic block at a given time.

Formally, the code can be represented as a Control Flow Graph (CFG) comprising all possible paths that can be traversed through the code during execution. The code is split into a set of disjoint blocks B and a set of oriented transitions between blocks $T: int$ x $int.$ With this definition, a CFG is defined by $CFG: B \times T$ where $(B_i, T_i) \in CFG$ wherein $B_i$ is a block of code corresponding to the program and $T_i$ is set of available transitions from this block.

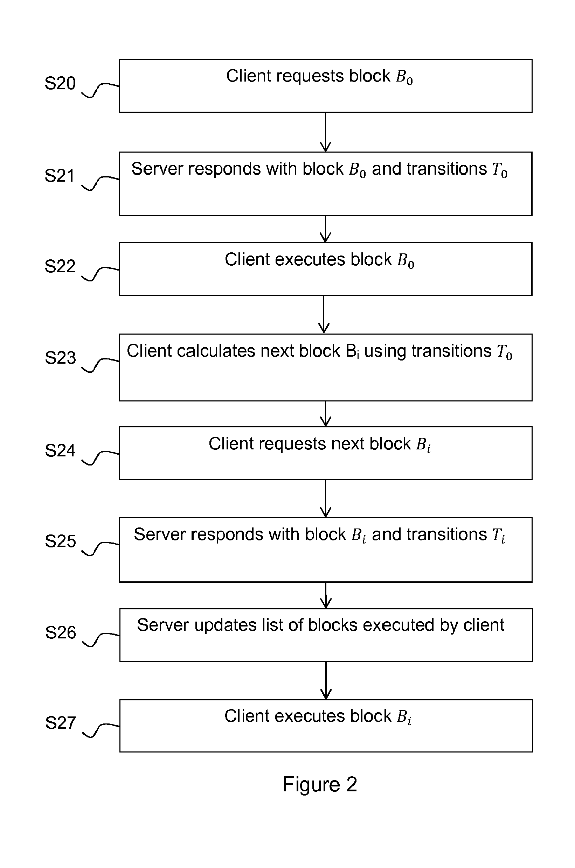

Figure 2 illustrates an example method for execution of code in an embodiment in accordance with the present principles. When the client 110 wants to start execution of a program, it requests, step S20, the first block $B_0$ and the corresponding transitions $T_0$ towards blocks that will be available after executing $B_0$ from the server 120 that responds, step S21, with the first block $B_0$ and the transitions $T_0$. The client 110 then executes, step S22, block $B_0$ and, sometime during execution (preferably at the end the block), calculates, step S23, the next block $B_i$ using one transition in the set $T_0$.

More generally, at any time (except for during transitions between blocks), the client 110 has the current block $B_i$ and the set of corresponding transitions $T_i$ where all $t \in T_i$ have the form $(i,*)$, calculates the next block $B_k$, requests this from the server 120 that in turn provides the requested block $B_k$ and the corresponding transition in the set $T_k$. In each $t = (i,*) \in T_i$, the $i$ is the index of the source block and the asterisk is an identifier for a possible target block $B_k$. While the number of available transitions usually is greater than one ($|T_i| > 1$), it may also be zero if execution stops with the current block ($T_i = \emptyset$) or one if the next block is predetermined ($|T_i| = 1$) (an example being shown hereinafter).

The server 120 is configured to store, for each client c, the spatial indices (or other identifier) of each block already executed by the client $X_c$: {int}. Initially, $X_c$ = {0}. The memory 122 advantageously also stores the blocks of software code, but it will be appreciated that the blocks can also be stored in external memory (not shown) accessible by the server 120.

Thus, the client 110 requests, step S24, block $B_k$ from the server 120 that sends, step S25, $B_k$ and $T_k$, and updates, step S26, $X_c$ u= {i}. The client 110 executes, step S27, the received block $B_k$.

Now, in order to patch code running on a client, it is sufficient to patch (i.e. modify) the corresponding block(s). For ease of illustration, it is assumed that a single block $B_p$ is modified to block $B_{p'}$. $\Psi$:int x int is the set of patches, where $(p,p')$ means that block $B_p$ has been replaced by block $B_{p'}$. The server receives the new block $B_{p'}$ and modifies the transition system to integrate the new block $B_{p'}$ in place of the old block $B_p$: all $(*,p)$ are replaced by $(*, p')$, and all $(p,*)$ are replaced by $(p',*)$. Depending on the block modifications, it may be necessary to patch the memory 112 of the client 110 too. In this case, a complement block $B_{p'_m}$ to $B_{p'}$ is added in order to modify the client memory 112 to be compatible with the new block $B_{p'}$.

Then, whenever a client requests a block $i$, there are a number of possibilities:

- $B_i$ has not been patched (since the client started execution of the program), i.e. $\nexists (i,*) \in \Psi$. In this case, the server sends $B_i$ and $T_i$ and computes $X_c$ u= {i} as already described.

- $B_i$ has been patched during the client's execution of the program, i.e $\exists (i, i') \in \Psi$:

  - In case the client has executed the memory patch block $B_{i'_m}$, i.e. $i'_m \in X_c$, then the server sends $B_{i'}$ and $T_{i'}$, and computes $X_c$ u= {i'}.

  - In case the client has not executed the memory patch block $B_{i'_m}$, i.e. $i'_m \notin X_c$, then the server sends $B_{i'_m}$ and the transition

$$T_{i'_m} = \{(i'_m, i')\}, \quad \text{and} \quad \text{computes}$$
$$X_c \; \cup= \; \{i'_m\}. X_c$$

It will be understood that in the last case, using the notation of the example before, the client will execute the memory patch block $B_{i'_m}$, from which the transition will be $T_{i'}$, which will cause the client to request basic block $B_{i'}$ from the server.

Thus, since the client can have a single block to execute at a time, the program can be patched without stopping the program or rebooting. A possible exception is if there is a need to patch a block that is currently executed and in which execution is at least temporarily stuck in a loop, which may occur if the execution idles such as when the client waits for some input that has not yet arrived.

It will be appreciated that if there is no need to patch the memory patch, then there is no need to store the indices of executed blocks $X_c$, to verify if the client has executed the block or to send the memory patch to the client.

It will also be appreciated that it is possible for the client to use a cache for the blocks, in particular those it has executed. Using cache techniques can help to optimize the transmission. For example, the client can then indicate in its request for a block that the block is stored in its cache, and the server can respond with OK (to use the version in cache) or, if for example the block has been patched, with a block to execute (which can be a patched version of the block or a block to patch the memory).

It will further be appreciated that the server can be configured to compute a set of possible blocks that the client can request (with $T_i$ when it has sent the block $B_i$) and to verify that the requested block is in this list. A requested block is sent only if it is in the set of possible blocks. This measure can help against hacking.

It will further be appreciated that various conventional optimization methods including partial evaluation, block prediction, speculative execution and memoization (see for example http://en.wikipedia.org/wiki/Memoization) can be used by the server in order to optimize the selection and evaluation of blocks that are to be sent.

It will further be appreciated that it is preferred to provide authentication and confidentiality of exchanges using an encrypted channel such as the Secure Authenticated Channel (SAC) described in WO 2006/048043.

The following example further illustrates the present principles using a simple evolution of a program during execution. The evolution operates within the body of a loop, which stresses the fine granularity level allowed by an embodiment of the present principles.

**Source code**

```
public class XXX {
  public static void main(String[] args) {
        // TODO Auto-generated method stub
            int i=0,j=0;
            boolean b=true;
            while(b){
                    i++;
                    if(j==3){
                            j++;
                            i--;
                    }
            }
        }
    }
```

**Byte code**

```
Compiled from "XXX.java"
public class XXX {
 public XXX();
   Code:
      0: aload_0
      1: invokespecial #8 // Method
java/lang/Object."<init>":()V
      4: return
    public static void
main(java.lang.String[]);
      Code:
        0: iconst_0 // i
        1: istore_1 // i
        2: iconst_0 // j
        3: istore_2 // j
        4: iconst_1 // b
        5: istore_3 // b
        6: goto 23
        9: iinc 1, 1 // i++
       12: iload_2 // if (j
       13: iconst_3 // 3
       14: if_icmpne 23 // ==
       17: iinc 2, 1 // j++
       20: iinc 1, -1 // i--
       23: iload_3
       24: ifne 9
       27: return
    }
```

In the example, instruction 17 in the body of the loop is changed and new instructions are inserted. The set of blocks B is the set of instructions 17 to 21. The set of transition corresponds to the sequential execution: 17→18, 18→19, until 20→21.

```
17: iinc 2, 2 // j++
18: iload_1
19: iconst_2 // 2
```

```
20: imul // *2
21: istore_1
```

Each time an instruction is added, all subsequent instructions and instruction references are renumbered accordingly. It is noted that the machine executing the code does not need to be aware of the renumbering when instruction caching techniques are not used.

In the most basic version of an embodiment of the present principles, each instruction is requested from the server before execution; in other words, a block equals one instruction. The code can evolve on the instruction level at the price of a penalty on the execution speed. It will be appreciated that common caching techniques can mitigate the speed penalty. For instance, the code evolution can be requested every two instructions, in association with a rollback mechanism.

The skilled person will appreciate that the present principles can be used in various contexts:

- They can allow continuous code update of network connected devices. This can be advantageous for network connected devices with embedded code, typically home gateways and set-top-boxes. Without the present principles, such devices apply network updates using for instance the TR-069 protocol. This may induce unavailability and reboot of the devices. The present principles apply particularly well to network devices with embedded code because they are always connected to the network (when switched on) and because the embedded code is small: replacement blocks can be small as well, thus mitigating the execution speed penalty.

- The present principles can be advantageous for casual console gamers. Video game consoles liked Microsoft Xbox, Sonny PS4, etc. spend time updating code and rebooting. The user must wait for the patch, even though the code contained in this patch will not be executed in the subsequent gaming session. Using the present principles: the patched code can be downloaded only when necessary and no reboot is then necessary. As mentioned, the cost is a longer execution time, which can be mitigated through the use of common caching techniques.

- The present principles can be used for anti-dumping. Some security contexts require that the memory never stores the full program code.
This requirement is sometimes called anti-dumping and is common with obfuscated programs. The present principles can be used as an anti-dumping measure, by constantly replacing executed sequences of instructions. In particular, the size of the code section of a program executed according to the present principles can be constant and relatively small.

- The present principles can allow starting code execution as soon as the first instruction is received, whereas, generally, software code is fully downloaded before its execution starts.

• The present principles can be used to save memory since the memory footprint of the code can be reduced. Some devices, like small computing devices such as, for example, the raspberry pi, have network connectivity but very constrained memory (e.g. 512 Mb). The present principles can then be used to reduce the size of code in memory, at the price of an increased number of network requests. Doing so can allow execution of a code that virtually exceeds the memory size of the device.

It will thus be appreciated that the present principles provide a solution for code execution that, at least in certain cases, can improve on the prior art code execution solutions.

Each feature disclosed in the description and (where appropriate) the claims and drawings may be provided independently or in any appropriate combination. Features described as being implemented in hardware may also be implemented in combinations of hardware and software, and vice versa. Reference numerals appearing in the claims are by way of illustration only and shall have no limiting effect on the scope of the claims.

**Claims**

1. A server device (120) for providing blocks of code of a program to a client device (110) executing the blocks of code, the server device comprising:

    an interface (123) configured to relay messages between the client device and a processor (121) of the server device; and
    the processor (121) configured to:

        receive from the client device a request comprising an identifier of a block of code;
        obtain a subsequent block of code corresponding to the identifier;
        obtain at least one transition for the subsequent block of code, the transition enabling the client to calculate an identifier of a block of code to request following execution of the subsequent block of code; and
        send the subsequent block of code and the transition for the subsequent block of code to the client.

2. The server device of claim 1, further comprising memory (122) configured to store blocks of code and identifiers of blocks of code provided to the client and transitions provided to the client and wherein the processor (121) is configured to store identifiers of blocks of code provided to the client in the memory (122).

3. The server device of claim 2, wherein the processor (121) is further configured to send the subsequent block of code and the transition for the subsequent block of code to the client if the memory does not store the identifier of the request, and, if the memory stores the identifier of the request, to send to the client an indication that a block of code corresponding to the identifier has been provided.

4. The server device of claim 2, wherein the processor (121) is further configured to determine whether the subsequent block of code has been replaced by an updated block during the client's execution of the program and, in this case, to determine whether a memory patch is needed at the client (110), wherein:

    if no memory patch is needed, the subsequent block is the updated block, and,
    if a memory patch is needed, the subsequent block of code is a block configured to patch the memory when executed and for which the transitions lead to the updated block.

5. The server device of claim 1, wherein the processor (121) is further configured to compute a set of blocks of code that can be requested by the client and to provide the subsequent block to the client when the identifier in the request corresponds to one of the blocks of the set of blocks.

6. The server device of claim 5, wherein the processor (121) is configured to compute the set of blocks of code using at least one method from the group of:

    partial evaluation, block prediction, speculative execution and memoization.

7. The server device of claim 1, wherein the processor (121) is further configured to communicate with the client device over an encrypted channel.

8. A method for providing blocks of code of a program to a client device (110) executing the blocks of code, the method comprising at a server device (120) comprising a processor (121):

    receiving from the client device a request comprising an identifier of a block of code;
    obtaining a subsequent block of code corresponding to the identifier;
    obtaining at least one transition for the subsequent block of code, the transition enabling the client to calculate an identifier of a block of code to request following execution of the subsequent block of code; and
    sending the subsequent block of code and the transition for the subsequent block of code to the client.

9. The method of claim 8, the server device further comprising memory (122) configured to store blocks of code and identifiers of blocks of code provided to the client and transition provided to the client, the method further comprising storing an identifier of the subsequent block of code in the memory (122).

10. The method of claim 9, wherein sending the subsequent block of code and the transition for the subsequent block of code to the client is performed if the memory does not store the identifier of the request, and the method comprises, if the memory stores the identifier of the request, sending to the client an indication that a block of code corresponding to the identifier has been provided.

11. The method of claim 9, further comprising determining whether the subsequent block of code has been replaced by an updated block during the client's execution of the program and, in this case, determining whether a memory patch is needed at the client (110), wherein:

    if no memory patch is needed, the subsequent block is the updated block, and,
    if a memory patch is needed, the subsequent block of code is a block configured to patch the memory when executed and for which the transition lead to the updated block.

12. The method of claim 8, further comprising computing a set of blocks of code that can be requested by the client and wherein the subsequent block is sent to the client when the identifier in the request corresponds to one of the blocks of the set of blocks.

13. The method of claim 12, wherein the computing the set of blocks of code includes using at least one method from the group of: partial evaluation, block prediction, speculative execution and memoization.

14. A client device (110) for receiving blocks of code of a program from a server device (120), the client device (110) comprising:

    an interface (113); and
    a processing unit (111) configured to:

        execute a block of code;
        calculate, using at least one transition for the block of code received from the server device (120), an identifier of a subsequent block of code;
        transmit to the server device (120), via the interface (113), a request comprising the identifier of a subsequent block of code; and
        receive from the server device (120), via the interface (113), the subsequent block of code and at least one transition for the subsequent block of code, the at least one transition enabling the processing unit (111) to calculate an identifier of a block of code to request following execution of the subsequent block of code.

15. A method for receiving blocks of code of a program from a server device (120), the method comprising at a client device (110):

    executing (S22) by a processing unit (111) a block of code;
    calculating (S23) by the processing unit (111), using at least one transition for the block of code received from the server device (120), an identifier of a subsequent block of code;
    transmitting (S24) by the processing unit (111), via an interface (113) of the client device (110), to the server device (120), a request comprising the identifier of a subsequent block of code; and
    receiving from the server device (120), via the interface (113), the subsequent block of code and at least one transition for the subsequent block of code, the at least one transition enabling the processing unit (111) to calculate an identifier of a block of code to request following execution of the subsequent block of code.

Figure 1

S20 — Client requests block $B_0$

S21 — Server responds with block $B_0$ and transitions $T_0$

S22 — Client executes block $B_0$

S23 — Client calculates next block $B_i$ using transitions $T_0$

S24 — Client requests next block $B_i$

S25 — Server responds with block $B_i$ and transitions $T_i$

S26 — Server updates list of blocks executed by client

S27 — Client executes block $B_i$

Figure 2

Europäisches
Patentamt

European
Patent Office

Office européen
des brevets

# EUROPEAN SEARCH REPORT

Application Number

EP 15 30 5616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 866 612 A1 (MATSUSHITA ELECTRONICS CORP [JP]) 23 September 1998 (1998-09-23)<br>* column 1, line 7 - line 16 *<br>* column 5, line 1 - line 6 *<br>* column 13, line 33 - column 21, line 27 *<br>* column 23, line 31 - column 25, line 18 *<br>* column 27, line 41 - column 28, line 52 *<br>----- | 1-15 | INV.<br>G06F9/445 |
| X | EP 1 158 404 A2 (SHARP KK [JP]) 28 November 2001 (2001-11-28)<br>* abstract *<br>* paragraph [0001] - paragraph [0004] *<br>* paragraph [0015] - paragraph [0027] *<br>* paragraph [0222] *<br>* paragraph [0266] - paragraph [0276] *<br>----- | 1,8,14, 15 | |
| A,D | WO 2006/048043 A1 (THOMSON LICENSING [FR]; ANDREAUX JEAN PIERRE [NL]; DURAND ALAIN [FR];) 11 May 2006 (2006-05-11)<br>* paragraph [0001] - paragraph [0006] *<br>----- | 7 | |
| | | | TECHNICAL FIELDS SEARCHED (IPC)<br><br>G06F<br>H04L |

The present search report has been drawn up for all claims

| Place of search | Date of completion of the search | Examiner |
|---|---|---|
| Munich | 13 October 2015 | Jonsson, Svante |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## EP 3 086 226 A1

### ANNEX TO THE EUROPEAN SEARCH REPORT
### ON EUROPEAN PATENT APPLICATION NO.

EP 15 30 5616

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2015

| Patent document cited in search report | | | Publication date | Patent family member(s) | | | Publication date |
|---|---|---|---|---|---|---|---|
| EP 0866612 | A1 | | 23-09-1998 | CN | 1208532 | A | 17-02-1999 |
| | | | | CN | 1592371 | A | 09-03-2005 |
| | | | | DE | 69726115 | D1 | 18-12-2003 |
| | | | | DE | 69726115 | T2 | 22-04-2004 |
| | | | | DE | 69732262 | D1 | 17-02-2005 |
| | | | | DE | 69732262 | T2 | 05-01-2006 |
| | | | | EP | 0866612 | A1 | 23-09-1998 |
| | | | | EP | 1331560 | A2 | 30-07-2003 |
| | | | | EP | 1513348 | A1 | 09-03-2005 |
| | | | | EP | 1786211 | A2 | 16-05-2007 |
| | | | | HK | 1057803 | A1 | 09-09-2005 |
| | | | | JP | 3803356 | B2 | 02-08-2006 |
| | | | | JP | 3963398 | B2 | 22-08-2007 |
| | | | | JP | 4224515 | B2 | 18-02-2009 |
| | | | | JP | 4224520 | B2 | 18-02-2009 |
| | | | | JP | 4283877 | B2 | 24-06-2009 |
| | | | | JP | 2005056434 | A | 03-03-2005 |
| | | | | JP | 2007128550 | A | 24-05-2007 |
| | | | | JP | 2008135037 | A | 12-06-2008 |
| | | | | JP | 2009060649 | A | 19-03-2009 |
| | | | | KR | 20040106562 | A | 17-12-2004 |
| | | | | US | 6157948 | A | 05-12-2000 |
| | | | | WO | 9811723 | A1 | 19-03-1998 |
| EP 1158404 | A2 | | 28-11-2001 | AU | 779185 | B2 | 13-01-2005 |
| | | | | AU | 4802101 | A | 29-11-2001 |
| | | | | CN | 1327307 | A | 19-12-2001 |
| | | | | EP | 1158404 | A2 | 28-11-2001 |
| | | | | JP | 4033619 | B2 | 16-01-2008 |
| | | | | JP | 2002049500 | A | 15-02-2002 |
| | | | | TW | 512593 | B | 01-12-2002 |
| | | | | US | 2001051916 | A1 | 13-12-2001 |
| WO 2006048043 | A1 | | 11-05-2006 | AT | 477636 | T | 15-08-2010 |
| | | | | AU | 2004324546 | A1 | 11-05-2006 |
| | | | | BR | PI0419162 | A | 11-12-2007 |
| | | | | CN | 101048970 | A | 03-10-2007 |
| | | | | EP | 1805929 | A1 | 11-07-2007 |
| | | | | ES | 2348240 | T3 | 01-12-2010 |
| | | | | JP | 4719749 | B2 | 06-07-2011 |
| | | | | JP | 2008518530 | A | 29-05-2008 |
| | | | | KR | 20070070198 | A | 03-07-2007 |
| | | | | KR | 20090119791 | A | 19-11-2009 |
| | | | | RU | 2009102230 | A | 27-07-2010 |
| | | | | WO | 2006048043 | A1 | 11-05-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006048043 A